# EUROPEAN PATENT APPLICATION

(11) **EP 4 183 822 A1**
(43) Date of publication of application: **24.05.2023**
(21) Application number: 21841204.7
(22) Date of filing: 07.07.2021
(51) Int. Cl.: C08J 5/18, C08G 63/181

(54) **ALIPHATIC-AROMATIC POLYESTER RESIN AND MOLDED ITEM THEREOF**

(30) Priority: 17.07.2020 JP 2020122966
(71) Applicant: Mitsubishi Chemical Corporation, Chiyoda-ku Tokyo 100-8251 (JP)
(72) Inventor: YASUI, Kouji, Tokyo 100-8251 (JP); TANAKA, Shunsuke, Tokyo 100-8251 (JP); YATSUGI, Yutaka, Tokyo 100-8251 (JP)
(74) Representative: Hoffmann Eitle
(86) International application number: PCT/JP2021/025593
(87) International publication number: WO 2022/014434

(57) **Abstract**

An aliphatic-aromatic polyester resin comprising principal structural units that includes aliphatic dicarboxylic acid units, aromatic dicarboxylic acid units, and aliphatic diol units and/or alicyclic diol units, wherein an abundance ratio (molar ratio) between the aliphatic dicarboxylic acid units and the aromatic dicarboxylic acid units is 15:85 to 85:15; the aliphatic-aromatic polyester resin has a glass transition temperature of -25°C or more; and the aliphatic-aromatic polyester resin has branched structures represented by formulae (1) to (4) below: 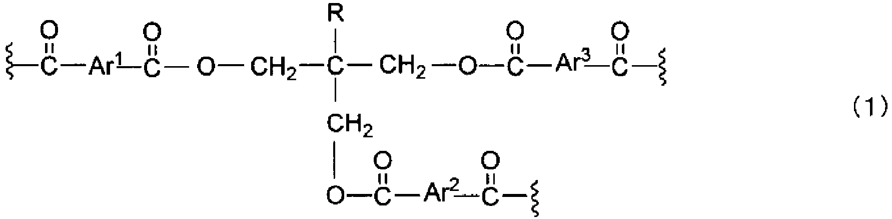 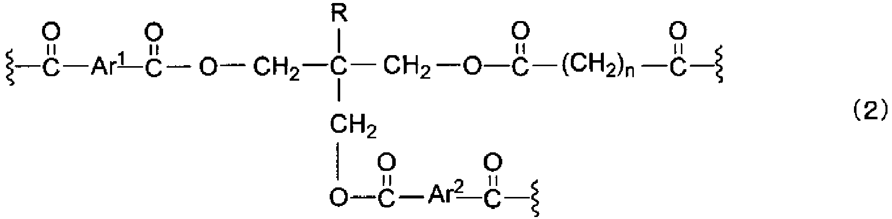 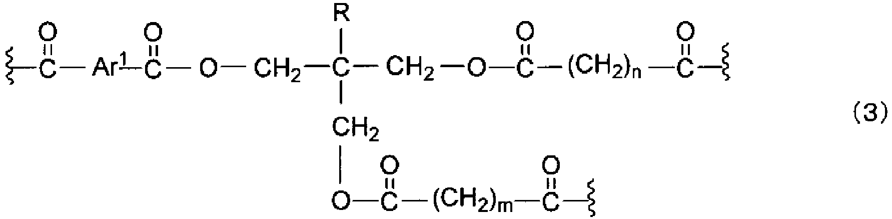 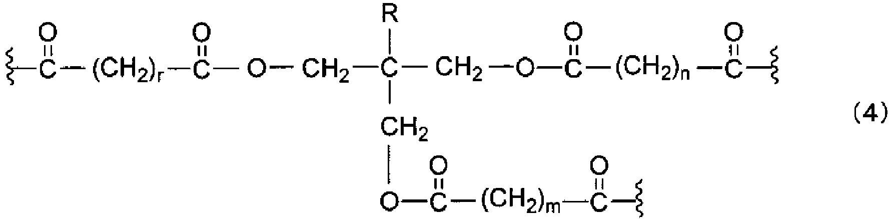 where Ar¹, Ar², and Ar³ each independently represent an optionally substituted divalent group having 4 to 12 carbon atoms, the optionally substituted divalent group being a divalent aromatic hydrocarbon group or a divalent aromatic heterocyclic group; R represents a hydrogen atom or an alkyl group having 1 to 4 carbon atoms; and n, m, and r are each independently an integer of 2 to 10.

## Description

### Technical Field

The present invention relates to an aliphatic-aromatic polyester resin that has a high molecular weight, has excellent formability, and can form a film having excellent mechanical properties, the mechanical properties including a tensile elongation at break. The present invention also relates to a molded article and a film of the aliphatic-aromatic polyester resin.

### Background Art

In recent years, there have been instances in which materials made of a petroleum-derived resin, such as packaging materials and agricultural materials, are released into the environment and remain without being decomposed, to become plastic waste, microplastics, and the like and, consequently, pollute the environment. These instances have posed a social problem.

To provide a means for solving the problem, polymeric materials having biodegradability (biodegradable plastics) have been developed, and some of these materials have been commercialized as biodegradable packaging materials or biodegradable agricultural materials. Representative examples of biodegradable plastics include aliphatic polyester-based resins, such as polylactic acids (which may hereinafter be abbreviated as "PLA"), polybutylene succinate (which may hereinafter be abbreviated as "PBS"), and polybutylene succinate adipate (which may hereinafter be abbreviated as "PBSA"); and aliphatic-aromatic polyester resins, such as polybutylene adipate terephthalate (which may hereinafter be abbreviated as "PBAT"), polybutylene succinate terephthalate (which may hereinafter be abbreviated as "PBST"), polybutylene sebacate terephthalate (which may hereinafter be abbreviated as "PBSeT"), polybutylene succinate furanoate (which may hereinafter be abbreviated as "PBSF"), and polybutylene azelate terephthalate (which may hereinafter be abbreviated as "PBAzT") .

Unfortunately, in some cases, these biodegradable plastics cannot have increased molecular weights because thermal stability during polymerization is not sufficient for forming a high-molecular-weight material, compared with aromatic polyester-based resins, such as polyethylene terephthalate and polybutylene terephthalate.

Regarding the forming of a high-molecular-weight material, examples of polyesters are disclosed, with one of the examples being a polyester obtained from a mixture of adipic acid, a derivative thereof, or a mixture thereof, terephthalic acid, an ester-forming derivative thereof, or a mixture thereof, and a sulfonate compound; a dihydroxy compound selected from C₂-C₆-alkanediols and C₅-C₁₀-cycloalkanediols; and a compound having at least three groups capable of ester formation, and another of the examples being a polyester obtained by further reacting diisocyanate (PTL 1). Furthermore, an aliphatic-aromatic polyester resin is disclosed, which is formed of aliphatic dicarboxylic acid units, aromatic dicarboxylic acid units, aliphatic and/or alicyclic diol units, and structural units having a tri- or higher functional ester-forming group (PTL 2) .

PTL 1: JP10-508640T
PTL 2: JP2008-031457A

The aliphatic-aromatic polyester disclosed in PTL 1 is one in which adipic acid or a derivative thereof is an essential component used as the aliphatic dicarboxylic acid that constitutes structural units. As a result, thermal stability during polymerization is poor, and the resulting polymer has a low thermal decomposition temperature. Furthermore, if a single-stage reaction is used, it is unlikely that the resulting polyester has a sufficiently high molecular weight; therefore, it is necessary to, first, form a low-molecular-weight polyester by polymerization and, subsequently, perform a second-stage reaction with diisocyanate to cause a chain-extending reaction to increase the molecular weight.

According to PTL 2, the polymerization reaction system includes malic acid, which is present in a specified ratio as a tri- or higher functional component serving as a branching agent. Accordingly, an increase in the molecular weight can be achieved in a single stage, and, consequently, productivity, impact resistance, flexibility, and tear resistance can be improved. However, studies conducted by the present inventors found that polymers including a branched structure derived from malic acid experience progression of a crosslinking reaction under hightemperature conditions in a kneading or molding process and, consequently, have an unintended increase in viscosity, which results in a decrease in molding stability, as demonstrated in Comparative Example 1, which will be described later.

### Summary of Invention

An object of the present invention is to provide an aliphatic-aromatic polyester resin that has a high molecular weight and exhibits high thermal stability when heated and, consequently, has excellent molding stability and can form a film having excellent mechanical properties, the mechanical properties including a tensile elongation at break.

Regarding high-molecular-weight aliphatic-aromatic polyester resins, the present inventors directed their attention to an abundance ratio (molar ratio) between aliphatic dicarboxylic acid units and aromatic dicarboxylic acid units, a glass transition temperature, and the skeletons of branched structures that are introduced to increase the molecular weight. It was discovered that an abundance ratio (molar ratio) between aliphatic dicarboxylic acid units and aromatic dicarboxylic acid units within a specified range, a glass transition temperature of greater than or equal to a specified value, and the presence of specific branched structures are correlated with the stability during molding and the mechanical properties of the resulting molded body, and it was discovered that by controlling the branched structures and an abundance proportion thereof, high thermal stability during heating and melting can be achieved, and excellent formability and excellent mechanical properties, with the mechanical properties including an elongation at break of films, can be exhibited.

The summary of the present invention is as described in [1] to [6] below.
[1] An aliphatic-aromatic polyester resin comprising principal structural units that comprise aliphatic dicarboxylic acid units, aromatic dicarboxylic acid units, and aliphatic diol units and/or alicyclic diol units, wherein
   an abundance ratio (molar ratio) between the aliphatic dicarboxylic acid units and the aromatic dicarboxylic acid units is 15:85 to 85:15,
   the aliphatic-aromatic polyester resin has a glass transition temperature of -25°C or more, and
   the aliphatic-aromatic polyester resin has branched structures represented by formulae (1) to (4) below: 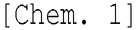 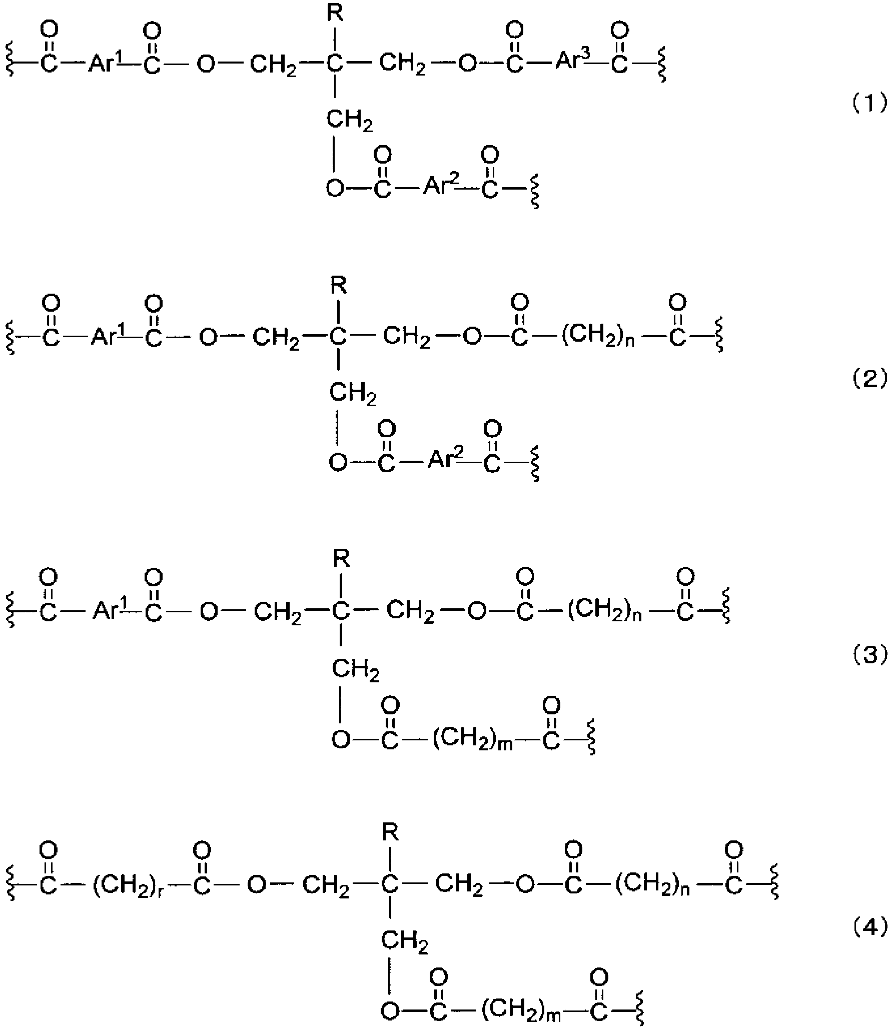
   where Ar¹, Ar², and Ar³ each independently represent an optionally substituted divalent group having 4 to 12 carbon atoms, the optionally substituted divalent group being a divalent aromatic hydrocarbon group or a divalent aromatic heterocyclic group; R represents a hydrogen atom or an alkyl group having 1 to 4 carbon atoms; and n, m, and r are each independently an integer of 2 to 10.
[2] The aliphatic-aromatic polyester resin according to [1], wherein a proportion, expressed in terms of mol%, of a total of the branched structures represented by formulae (1) to (4) to a total of all structural units is 0.00001 mol% or more and less than 4.0 mol%.
[3] The aliphatic-aromatic polyester resin according to [1] or [2], wherein the aliphatic dicarboxylic acid units are units of a linear aliphatic dicarboxylic acid having 4 to 10 carbon atoms, the aromatic dicarboxylic acid units are units of an aromatic dicarboxylic acid having 6 to 8 carbon atoms, and the aliphatic diol units are units of a linear diol having 2 to 4 carbon atoms.
[4] The aliphatic-aromatic polyester resin according to any one of [1] to [3], wherein the aliphatic dicarboxylic acid units are succinic acid units, the aromatic dicarboxylic acid units are terephthalic acid units, and the aliphatic diol units are 1,4-butanediol units.
[5] A molded article molded from the aliphatic-aromatic polyester resin according to any one of [1] to [4].
[6] A film molded from the aliphatic-aromatic polyester resin according to any one of [1] to [4].

### Advantageous Effects of Invention

The present invention provides an aliphatic-aromatic polyester resin that has a high molecular weight and exhibits high thermal stability when heated and, accordingly, has excellent molding stability and can form a film having excellent mechanical properties, the mechanical properties including a tensile elongation at break. The present invention also provides a molded article and a film that are made of the aliphatic-aromatic polyester resin.

### Brief Description of Drawings

[Fig. 1] Fig. 1 illustrates reaction schemes for the process of formation of branched structures represented by formulae (1) to (4), in a production process for an aliphatic-aromatic polyester resin of the present invention.
[Fig. 2] Fig. 2 is a graph illustrating changes in torque over time during the melting of aliphatic-aromatic polyester resins obtained in Example 1 and Comparative

### Example 1.

### Description of Embodiments

Embodiments of the present invention will be described in detail below. The present invention is not limited to the following descriptions and can be modified and implemented as desired within a scope that does not depart from the summary of the present invention. In this specification, when "to" is used with preceding and following numerical values or physical property values, the preceding and following values are to be construed as being included.

### [Aliphatic-Aromatic Polyester Resin]

An aliphatic-aromatic polyester resin of the present invention comprises principal structural units that comprise aliphatic dicarboxylic acid units, aromatic dicarboxylic acid units, and aliphatic diol units and/or alicyclic diol units, wherein an abundance ratio (molar ratio) between the aliphatic dicarboxylic acid units and the aromatic dicarboxylic acid units is 15:85 to 85:15; the aliphatic-aromatic polyester resin has a glass transition temperature of -25°C or more; and the aliphatic-aromatic polyester resin has branched structures represented by formulae (1) to (4) below.

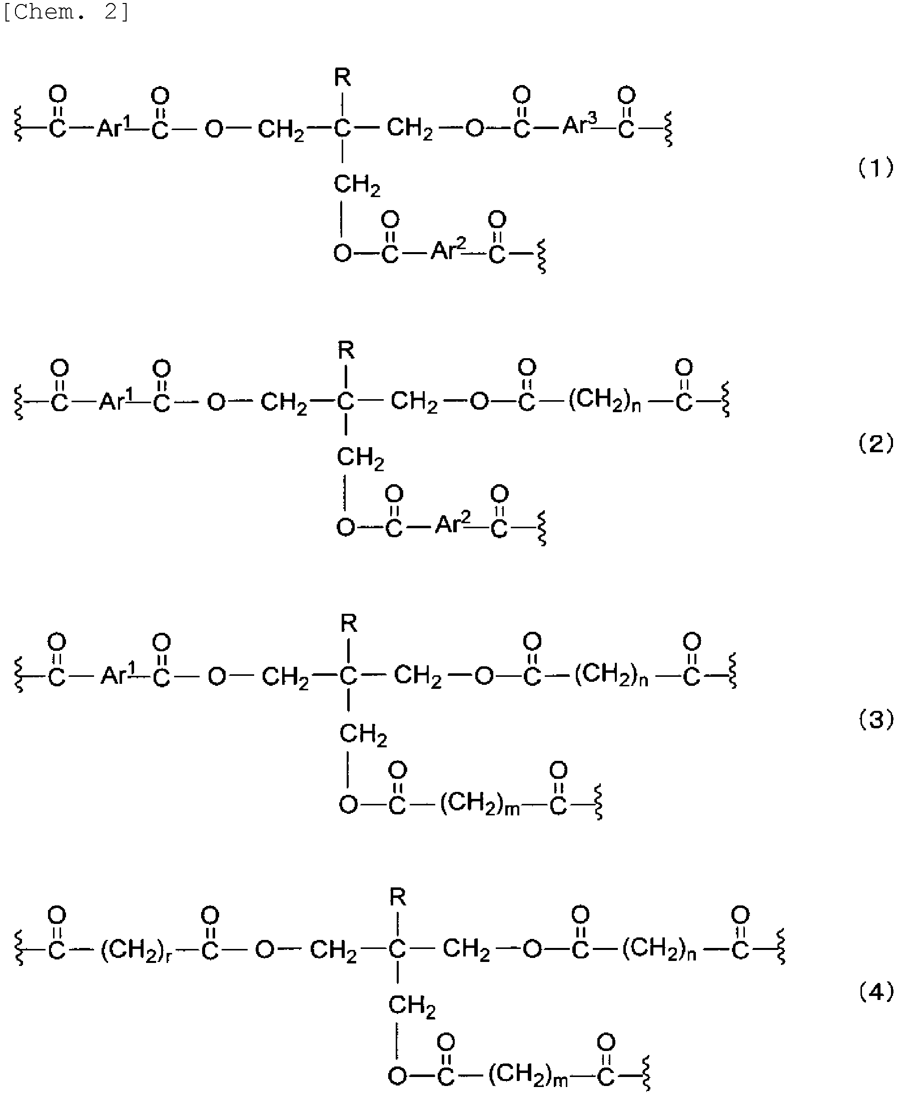

In the formulae (1)-(4), Ar¹, Ar², and Ar³ each independently represent an optionally substituted divalent group having 4 to 12 carbon atoms, the optionally substituted divalent group being a divalent aromatic hydrocarbon group or a divalent aromatic heterocyclic group. R represents a hydrogen atom or an alkyl group having 1 to 4 carbon atoms. n, m, and r are each independently an integer of 2 to 10.

In the present invention, the "aliphatic dicarboxylic acid units" are repeating units that are derived from an aliphatic dicarboxylic acid and/or a derivative thereof (which may hereinafter be referred to as an "aliphatic dicarboxylic acid component") and are introduced into the aliphatic-aromatic polyester resin.

The "aromatic dicarboxylic acid units" are repeating units that are derived from an aromatic dicarboxylic acid and/or a derivative thereof (which may hereinafter be referred to as an "aromatic dicarboxylic acid component") and are introduced into the aliphatic-aromatic polyester resin. In the present invention, the "aromatic dicarboxylic acid" refers to aromatic dicarboxylic acids that are meant in a broad sense and include heteroaromatic dicarboxylic acids.

The "aliphatic diol units" are repeating units that are derived from an aliphatic diol and are introduced into the aliphatic-aromatic polyester resin. The "alicyclic diol units" are repeating units that are derived from an alicyclic diol and are introduced into the aliphatic-aromatic polyester resin.

The "principal structural units" are units that are present in an amount of 55 mol% or more based on the total moles of all the structural units that form the aliphatic-aromatic polyester resin. Preferably, the principal structural units are units that are present in an amount of 75 mol% or more, and more preferably, 85 to 100 mol%.

### <Proportion of Branched Structures (1) to (4)>

In the aliphatic-aromatic polyester resin of the present invention, a proportion, expressed in terms of mol%, of the total of the branched structures represented by formulae (1) to (4), shown above, to the total of all the structural units that form the aliphatic-aromatic polyester resin (hereinafter, this proportion may be referred to simply as a "proportion of the branched structures (1) to (4)) is not particularly limited and is preferably 0.00001 mol% or more and less than 4 mol%. When the proportion of the branched structures (1) to (4) is less than 4.0 mol%, excessive progression of crosslinking in the polymer during the production of the polymer does not occur, which enables a strand to be securely drawn and, consequently, prevents problems such as degraded formability due to gelation during molding and impairment of physical properties. When the proportion of the branched structures (1) to (4) is 0.00001 mol% or more, reactivity for the polymerization reaction is not reduced, and a bubble during inflation molding is stable, which facilitates the molding. Accordingly, in instances where the proportion of the branched structures (1) to (4) is controlled to be within the above-mentioned range, productivity during the production of the polymer can be improved, and in addition, the mechanical properties of a molded body (specifically, a film) that can be obtained can be improved.

The proportion of the branched structures (1) to (4) in the aliphatic-aromatic polyester resin of the present invention is more preferably 0.001 mol% or more and 2.0 mol% or less, is further preferably 0.005 mol% or more and 1.0 mol% or less, is particularly preferably 0.01 mol% or more and 0.5 mol% or less, and is most preferably 0.015 mol% or more and 0.4 mol% or less.

A proportion, expressed in terms of mol%, of the branched structure represented by formula (1), shown above, to the total of all the structural units that form the aliphatic-aromatic polyester resin of the present invention (hereinafter, this proportion may be referred to as a "proportion of the branched structure (1)) is not particularly limited and is preferably less than 1.0 mol%. The proportion is more preferably 0.1 mol% or less, is further preferably 0.05 mol% or less, and is particularly preferably 0.04 mol% or less.

A proportion, expressed in terms of mol%, of the branched structure represented by formula (2), shown above, to the total of all the structural units that form the aliphatic-aromatic polyester resin of the present invention (hereinafter, this proportion may be referred to as a "proportion of the branched structure (2)) is not particularly limited and is preferably less than 1.0 mol%. The proportion is more preferably 0.5 mol% or less, is further preferably 0.1 mol% or less, and is particularly preferably 0.08 mol% or less.

A proportion, expressed in terms of mol%, of the branched structure represented by formula (3), shown above, to the total of all the structural units that form the aliphatic-aromatic polyester resin of the present invention (hereinafter, this proportion may be referred to as a "proportion of the branched structure (3)) is not particularly limited and is preferably less than 1.0 mol%. The proportion is more preferably 0.5 mol% or less, is further preferably 0.1 mol% or less, and is particularly preferably 0.07 mol% or less.

A proportion, expressed in terms of mol%, of the branched structure represented by formula (4), shown above, to the total of all the structural units that form the aliphatic-aromatic polyester resin of the present invention (hereinafter, this proportion may be referred to as a "proportion of the branched structure (4)) is not particularly limited and is preferably less than 1.0 mol%. The proportion is more preferably 0.1 mol% or less, is further preferably 0.05 mol% or less, and is particularly preferably 0.04 mol% or less.

Note that the values of the proportions (mol%) of the branched structures represented by formulae (1) to (4), shown above, may be the same as or different from one another.

The proportion of the branched structure (1), the proportion of the branched structure (2), the proportion of the branched structure (3), the proportion of the branched structure (4), and the proportion of the branched structures (1) to (4) can be determined by measuring the molar fractions by ¹H-NMR as described in Examples below.

### <Branched Structures Represented by Formulae (1) to (4)>

In formulae (1) to (4), Ar¹, Ar², and Ar³ are each independently an optionally substituted divalent group having 4 to 12 carbon atoms, the optionally substituted divalent group being a divalent aromatic hydrocarbon group or a divalent aromatic heterocyclic group. Ar¹, Ar², and Ar³ are each independently an optionally substituted divalent group having 4 to 6 carbon atoms, the optionally substituted divalent group being a divalent aromatic hydrocarbon group or a divalent aromatic heterocyclic group. Preferred examples of the divalent aromatic hydrocarbon group include p-phenylene groups and m-phenylene groups. Examples of the divalent aromatic heterocyclic group include 2,5-furandiyl groups. These can be introduced as a raw material dicarboxylic acid and/or a derivative thereof (which may hereinafter be referred to as a "dicarboxylic acid component") of the aliphatic-aromatic polyester resin, into the aliphatic-aromatic polyester resin. The respective raw material dicarboxylic acids and/or derivatives thereof may be terephthalic acid and/or a derivative thereof, isophthalic acid and/or a derivative thereof, and furandicarboxylic acid and/or a derivative thereof.

Ar¹, Ar², and Ar³ are optionally substituted. Specific examples of the substituent include sulfonic acid groups, sulfonate salt groups, alkyl groups, alkoxy groups, halogen atoms, nitro groups, and aromatic groups.

R is a hydrogen atom or an alkyl group having 1 to 4 carbon atoms. Examples of the alkyl group include methyl groups, ethyl groups, propyl groups, isopropyl groups, and n-butyl groups.

n, m, r are each independently an integer of 2 to 10 and preferably an integer of 2 to 8.

The branched structures represented by formulae (1) to (4) can be introduced as raw material dicarboxylic acid components and a raw material diol component, described below, of the aliphatic-aromatic polyester resin of the present invention, into the aliphatic-aromatic polyester resin of the present invention via an ester-forming reaction and/or a transesterification reaction, in which compounds that enable the introduction of the branched structures represented by formulae (1) to (4) are used in a specified ratio such that, preferably, the above-mentioned proportion of the branched structures (1) to (4) is achieved.

### <Aliphatic Dicarboxylic Acid Component>

The aliphatic dicarboxylic acid component that constitutes the aliphatic dicarboxylic acid units, which are dicarboxylic acid units that form the aliphatic-aromatic polyester resin of the present invention, is not particularly limited. In consideration of a balance between cost, mechanical properties, thermal properties, and biodegradability, the aliphatic dicarboxylic acid component is preferably an aliphatic dicarboxylic acid component having 4 to 12 carbon atoms, in particular, 4 to 10 carbon atoms, and is particularly preferably a linear aliphatic dicarboxylic acid component having 4 to 10 carbon atoms. Specific examples thereof include succinic acid, glutaric acid, adipic acid, suberic acid, sebacic acid, azelaic acid, dodecanedioic acid, and derivatives thereof, the derivatives including alkyl esters. Among these, succinic acid, sebacic acid, adipic acid, azelaic acid, and derivatives thereof are preferable, the derivatives including alkyl esters. In particular, succinic acid and derivatives thereof are preferable. The derivatives may be acid anhydrides thereof. These aliphatic dicarboxylic acid components may be used alone or in a mixture of two or more.

### <Aromatic Dicarboxylic Acid Component>

The aromatic dicarboxylic acid component that constitutes the aromatic dicarboxylic acid units, which are dicarboxylic acid units that form the aliphatic-aromatic polyester resin of the present invention, is not particularly limited. In consideration of a balance between cost, mechanical properties, thermal properties, and biodegradability, the aromatic dicarboxylic acid component is preferably an aromatic dicarboxylic acid component having 4 to 14 carbon atoms, more preferably 4 to 12 carbon atoms, even more preferably 4 to 8 carbon atoms, and particularly preferably 4 to 6 carbon atoms. Specific examples thereof include terephthalic acid, isophthalic acid, furandicarboxylic acid, naphthalenedicarboxylic acid, diphenyldicarboxylic acid, and lower alkyl esters thereof. These may be acid anhydrides. Among these, terephthalic acid, isophthalic acid, furandicarboxylic acid, or a lower alkyl (e.g., having 1 to 4 carbon atoms) ester is preferable. In particular, terephthalic acid or a lower alkyl (e.g., having 1 to 4 carbon atoms) ester thereof is preferable. These aromatic dicarboxylic acid components may be used alone or in a mixture of two or more.

### <Proportion Between Aliphatic Dicarboxylic Acid Units and Aromatic Dicarboxylic Acid Units>

A proportion (abundance ratio (molar ratio)) between the aliphatic dicarboxylic acid units and the aromatic dicarboxylic acid units that constitute the dicarboxylic acid units of the aliphatic-aromatic polyester resin of the present invention is 15:85 to 85:15. The proportion is preferably 30:70 to 70:30 and is more preferably 40:60 to 60:40. If the proportion of the aliphatic dicarboxylic acid units is less than the lower limit, and the proportion of the aromatic dicarboxylic acid units is greater than the upper limit, the biodegradability of the aliphatic-aromatic polyester resin is impaired, and the flexibility thereof tends to be insufficient. If the proportion of the aliphatic dicarboxylic acid units is greater than the upper limit, and the proportion of the aromatic dicarboxylic acid units is less than the lower limit, a thermal decomposition temperature is lowered, and an elongation at break of a formed film is low; consequently, flexibility tends to be insufficient.

When the abundance ratio (molar ratio) between the aliphatic dicarboxylic acid units and the aromatic dicarboxylic acid units is any of the specific ratios mentioned above, the aliphatic-aromatic polyester resin of the present invention exhibits excellent properties, the properties including biodegradability, heat resistance, and flexibility.

The abundance ratio (molar ratio) can be controlled by controlling the amounts (proportions) of the aliphatic dicarboxylic acid component and the aromatic dicarboxylic acid component of the raw materials that are used, in a method for producing the aliphatic-aromatic polyester resin, which will be described later.

The abundance ratio (molar ratio) can be determined by measuring the molar fractions by ¹H-NMR as described in Examples below.

### <Aliphatic and/or Alicyclic Diols>

Examples of the diol components that constitute the aliphatic and/or alicyclic diol units, which constitute the diol units of the aliphatic-aromatic polyester resin of the present invention, include aliphatic diols having 2 to 10 carbon atoms, such as ethylene glycol, diethylene glycol, triethylene glycol, 1,3-propanediol, 1,2-propanediol, 1,4-butanediol, 1,5-pentanediol, and 1,6-hexanediol; and alicyclic diols having 3 to 12 carbon atoms, such as 1,4-cyclohexanediol and 1,4-cyclohexanedimethanol. Among these, in consideration of the physical properties of the aliphatic-aromatic polyester resin produced, linear diols having 2 to 4 carbon atoms, such as 1,4-butanediol, ethylene glycol, and 1,3-propanediol, are preferable; in particular, 1,4-butanediol and ethylene glycol are preferable, and among others, 1,4-butanediol is preferable. These may be used alone or in a mixture of two or more.

### <Trifunctional Polyol>

For the formation of the branched structures represented by formulae (1) to (4) in the aliphatic-aromatic polyester resin of the present invention, it is preferable to use a trifunctional polyol in addition to the components described above, in the production of the aliphatic-aromatic polyester resin. Examples of the trifunctional polyol that may be used to introduce the branched structures represented by formulae (1) to (4) include trimethylolalkanes, and specific examples of the trimethylolalkanes include trimethylolmethane (for introducing the branched structure of R=H in formulae (1) to (4)), trimethylolethane (for introducing the branched structure of R=CH₃ in formulae (1) to (4)), trimethylolpropane (for introducing the branched structure of R=C₂H₅ in formulae (1) to (4)), trimethylolbutane (for introducing the branched structure of R=n-C₃H₇ in formulae (1) to (4)), trimethylolisobutane (for introducing the branched structure of R=i-C₃H₇ in formulae (1) to (4)), and trimethylolpentane (for introducing the branched structure of R=C₄H₉ in formulae (1) to (4)). Furthermore, glycerin, pentaerythritol, and/or the like may be additionally used. These may be used alone or in a mixture of two or more.

### <Introduction of Branched Structures Represented by Formulae (1) to (4) and Control of Proportion of Branched Structures>

The aliphatic-aromatic polyester resin of the present invention, which includes the branched structures represented by formulae (1) to (4), can be produced from raw materials, by performing an esterification and/or transesterification reaction step and a subsequent polycondensation reaction step, as described later. The raw materials to be used include at least an aliphatic dicarboxylic acid component, an aromatic dicarboxylic acid component, and aliphatic and/or alicyclic diols as described above and may include a trifunctional polyol as described above.

The aliphatic dicarboxylic acid component, the aromatic dicarboxylic acid component, the aliphatic and/or alicyclic diols, and the trifunctional polyol that are used in the production of the aliphatic-aromatic polyester resin of the present invention may be those derived from a petroleum source or those derived from a biomass source. It is preferable that these components be components derived from a biomass source, because using such components consequently inhibits carbon dioxide derived from a petroleum source from being formed during biodegradation or combustion.

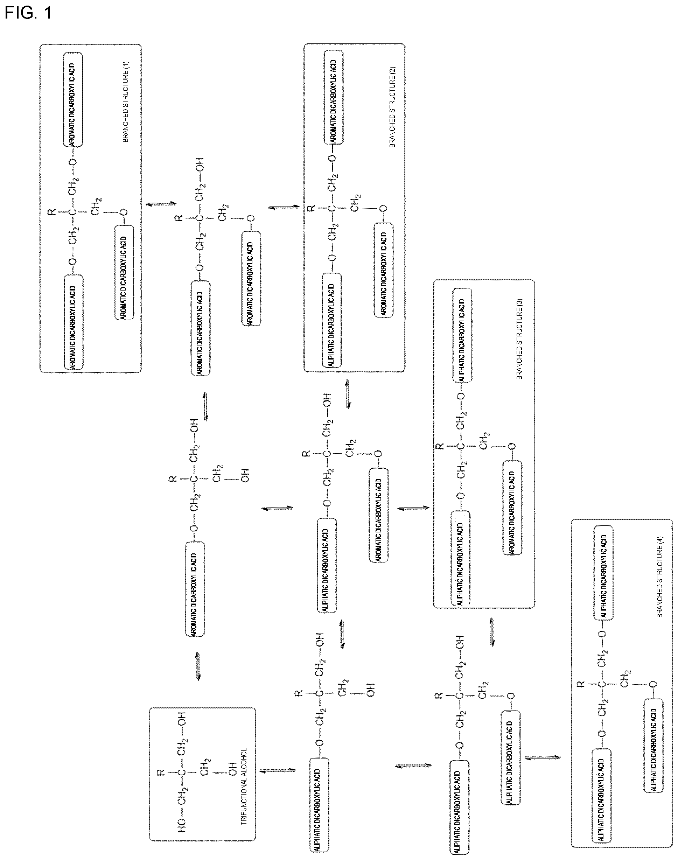

In the present invention, the aliphatic-aromatic polyester resin is produced from aliphatic and/or alicyclic diols, an aliphatic dicarboxylic acid component, and an aromatic dicarboxylic acid component, by performing, in the presence of a catalyst, the esterification and/or transesterification reaction step and the subsequent polycondensation reaction step. For the production, by using a trifunctional polyol as described above together with these raw materials, the branched structures represented by formulae (1) to (4) can be formed. In this instance, the process of formation of the branched structures is assumed to be as illustrated in Fig. 1.

In Fig. 1, the trifunctional polyol is referred to as "trifunctional alcohol", the aliphatic dicarboxylic acid component as "aliphatic carboxylic acid", and the aromatic dicarboxylic acid component as "aromatic dicarboxylic acid".

Each of the reaction schemes illustrated in Fig. 1 shows an equilibrium reaction. Both a difference in reactivity with a trifunctional polyol between the aromatic dicarboxylic acid component and the aliphatic dicarboxylic acid component (kinetic dominance) and a difference in stability between products in the equilibrium reactions (thermodynamic dominance) contribute to the reactions.

The present inventors discovered that by controlling a mixing ratio between the components, a reaction temperature, and a reaction time, it is possible to control the reaction product with thermodynamic dominance.

For example, the abundance ratio (molar ratio) between the aliphatic dicarboxylic acid units and the aromatic dicarboxylic acid units and the content and ratio of the branched structures represented by formulae (1) to (4) can be controlled as follows: a charging molar ratio between the aromatic dicarboxylic acid component and the aliphatic dicarboxylic acid component is specified, and then, an amount of the trifunctional polyol that is supplied is specified; thereafter, in the initial esterification and/or transesterification reaction step, while the inside of the system is stirred, the temperature is increased to a temperature of 170°C to 200°C, and the reaction is conducted for 45 minutes to 1 hour. In the process, intermediate dialcohols and monoalcohols are fully reacted, so that the reaction is completed in a manner such that the branched structures represented by formulae (1) to (4) are formed in a sufficient and not excessive amount. Accordingly, the abundance proportion of each of the branched structures can be easily controlled to be a desired value.

The proportion of each of the branched structures of formulae (1) to (4) can be controlled in a manner different from the specific manner described above. For example, a temperature, a reaction time, and/or the like may be controlled in the raw material charging, a reaction step, and/or the like.

### <Other Structural Units and the Like>

The aliphatic-aromatic polyester resin of the present invention may include repeating units derived from an aliphatic oxycarboxylic acid (aliphatic oxycarboxylic acid units). Specific examples of aliphatic oxycarboxylic acid components that provide the aliphatic oxycarboxylic acid units include lactic acid, glycolic acid, 2-hydroxy-n-butyric acid, 2-hydroxycaproic acid, 6-hydroxycaproic acid, 2-hydroxy-3,3-dimethylbutyric acid, 2-hydroxy-3-methylbutyric acid, 2-hydroxyisocaproic acid, and derivatives of any of the foregoing acids, the derivatives including lower alkyl esters and intramolecular esters. In cases where enantiomers of these acids exist, D- and/or L-enantiomers may be used, or a racemic mixture may be used. The acids may be in the form of a solid, a liquid, or an aqueous solution. Among these, lactic acid, glycolic acid, or a derivative of either of these is particularly preferable. These aliphatic oxycarboxylic acids may be used alone or in a mixture of two or more.

In the case where the aliphatic-aromatic polyester resin of the present invention includes any of these aliphatic oxycarboxylic acid units, a content thereof is, in consideration of formability, preferably 20 mol% or less, is more preferably 10 mol% or less, is further preferably 5 mol% or less, and is most preferably 0 mol% (absent), based on the total moles of all the structural units that form the aliphatic-aromatic polyester resin.

In the production of the aliphatic-aromatic polyester resin of the present invention, it is possible to use a chain extender, such as a diisocyanate, a diphenyl carbonate, a dioxazoline, or a silicic acid ester. Specific examples of the diisocyanate include known diisocyanates, such as 2,4-tolylene diisocyanate, a mixture of 2,4-tolylene diisocyanate and 2,6-tolylene diisocyanate, diphenylmethane diisocyanate, 1,5-naphthylene diisocyanate, xylylene diisocyanate, hydrogenated xylylene diisocyanate, hexamethylene diisocyanate, and isophorone diisocyanate. Specific examples of the silicic acid ester include tetramethoxysilane, dimethoxydiphenylsilane, dimethoxydimethylsilane, and diphenyldihydroxysilane. These may be used alone or in a mixture of two or more.

In the production of the aliphatic-aromatic polyester resin of the present invention, an end group of the polyester may be capped with a carbodiimide, an epoxy compound, a monofunctional alcohol, or a carboxylic acid. In instances where an end group of the polyester is capped, the aliphatic-aromatic polyester resin is expected to have improved hydrolysis resistance.

### [Method for Producing Aliphatic-Aromatic Polyester Resin]

A method for producing the aliphatic-aromatic polyester resin of the present invention uses a trifunctional polyol to control the reactions to introduce the branched structures represented by formulae (1) to (4), as described above. In other respects, the method may be similar to a known method for producing a polyester.

In this instance, the polycondensation reaction is not particularly limited, and appropriate conditions that are employed in the related art may be set therefor. Commonly, a method is employed in which after the esterification and/or transesterification reactions are allowed to proceed, a depressurization operation is performed to further increase the degree of polymerization.

In the production of the aliphatic-aromatic polyester resin of the present invention, in the case where the diol component that forms the diol units and the dicarboxylic acid components that form the dicarboxylic acid units are reacted with the trifunctional polyol for forming the branched structures represented by formulae (1) to (4), amounts of use of the diol component, the dicarboxylic acid components, and the trifunctional polyol are to be set such that the aliphatic-aromatic polyester resin that is produced has a target composition. Commonly, the diol component and the dicarboxylic acid components react with each other in substantially equimolar amounts; however, since the diol component is discharged as a distillate during the esterification or transesterification reaction, the diol component is commonly used in 1 to 20 mol% excess with respect to the dicarboxylic acid components.

The method for producing the aliphatic-aromatic polyester resin according to the present invention is described below taking a continuous production method as an example.

In the method described as an example below, the aliphatic-aromatic polyester resin is produced by conducting an esterification reaction step using an aliphatic diol, a trifunctional polyol, an aliphatic dicarboxylic acid, and an aromatic dicarboxylic acid and subsequently conducting a polycondensation reaction step. The esterification reaction step may be a transesterification reaction step or a step in which both esterification reaction and transesterification reaction are conducted. The aliphatic diol may be replaced with an alicyclic diol.

In the continuous production method, for example, an aliphatic dicarboxylic acid, an aromatic dicarboxylic acid, an aliphatic diol, and a trifunctional polyol are subjected to an esterification reaction step and a melt polycondensation reaction step with a plurality of reaction tanks arranged sequentially to continuously form polyester pellets. The method for producing the aliphatic-aromatic polyester resin of the present invention is not limited to the continuous method; methods for producing a polyester which are known in the related art may be used without impairing the advantageous effects of the present invention.

### <Esterification Reaction Step>

The esterification reaction step, in which at least dicarboxylic acid components, a diol component, and a trifunctional polyol are caused to react with one another, and the subsequent polycondensation reaction step can be conducted using either a plurality of reaction tanks arranged sequentially or a single reaction tank. It is preferable to conduct the above reaction steps using a plurality of reaction tanks arranged sequentially in order to reduce variations in the physical properties of the polyester produced.

The reaction temperature in the esterification reaction step is not limited and may be any temperature at which the esterification reaction can be conducted. The reaction temperature is preferably 200°C or more and is more preferably 210°C or more in order to increase reaction velocity. The reaction temperature is preferably 270°C or less, is more preferably 260°C or less, and is particularly preferably 250°C or less in order to prevent, for example, staining of the polyester. If the reaction temperature is excessively low, the esterification reaction velocity is low and a large amount of reaction time is required. This increases the occurrence of unfavorable reactions, such as dehydration decomposition of aliphatic diols. If the reaction temperature is excessively high, the amounts of aliphatic diol, aliphatic dicarboxylic acid, aromatic dicarboxylic acid, and trifunctional polyol decomposed are increased. Furthermore, the amount of substances scattered inside the reaction tank is increased. They are likely to cause the formation of foreign matter and increase the occurrence of haze in the reaction product. The esterification reaction temperature is preferably a constant temperature. When the esterification reaction temperature is a constant temperature, the esterification rate becomes stabilized. The constant temperature is preset temperature ± 5°C and is preferably preset temperature ± 2°C.

As described above, in the esterification reaction step, at an initial stage of the reaction, the temperature is increased to a temperature of 170°C to 200°C, and the reaction is conducted for 45 minutes to 1 hour, to control the proportions of the branched structures.

The reaction atmosphere is preferably an inert gas atmosphere, such as nitrogen or argon.

The reaction pressure is preferably 50 to 200 KPa, is more preferably 60 KPa or more, and is further preferably 70 KPa or more; and is more preferably 130 KPa or less and is further preferably 110 KPa or less. If the reaction pressure is less than the above lower limit, the amount of substances scattered inside the reaction tank is increased, the haze of the reaction product is increased, and the amount of foreign matter is likely to be increased. Furthermore, the amount of the aliphatic diol discharged outside the reaction system as a distillate is increased and, consequently, polycondensation reaction velocity is likely to be reduced. If the reaction pressure exceeds the above upper limit, the occurrence of dehydration decomposition of the aliphatic diol is increased and, consequently, polycondensation reaction velocity is likely to be reduced.

The reaction time is preferably 1 hour or more. The upper limit thereof is preferably 10 hours or less and is more preferably 4 hours or less.

The molar reaction ratio of the amount of the aliphatic diol to the total amount of the aliphatic dicarboxylic acid and the aromatic dicarboxylic acid used in the esterification reaction is the molar ratio of the amount of the aliphatic diol and the esterified aliphatic diol to the amount of the aliphatic dicarboxylic acid, the aromatic dicarboxylic acid, the esterified aliphatic dicarboxylic acid, and the esterified aromatic dicarboxylic acid that are present in the gas phase and reaction solution phase of the esterification reaction tank. The aliphatic dicarboxylic acid, aromatic dicarboxylic acid, and aliphatic diol that become decomposed in the reaction system and do not contribute to the esterification reaction and the decomposition products thereof are not taken into account. Examples of the substances that become decomposed and do not contribute to the esterification reaction include tetrahydrofuran produced as a result of decomposition of 1,4-butanediol, which is an aliphatic diol. Tetrahydrofuran is not taken into account in the calculation of the above molar ratio.

In the present invention, the lower limit for the above molar reaction ratio is commonly 1.10 or more, is preferably 1.12 or more, is further preferably 1.15 or more, and is particularly preferably 1.20 or more. The upper limit for the above molar reaction ratio is commonly 3.00 or less, is preferably 2.50 or less, is further preferably 2.30 or less, and is particularly preferably 2.00 or less. If the above molar reaction ratio is less than the above lower limit, the esterification reaction is unlikely to occur to a sufficient degree, the subsequent reaction, that is, the polycondensation reaction, is unlikely to occur smoothly, and it becomes difficult to produce a polyester having a high degree of polymerization. If the above molar reaction ratio exceeds the above upper limit, the amount of aliphatic diol, aliphatic dicarboxylic acid, and aromatic dicarboxylic acid decomposed are likely to be increased. It is preferable to supply the aliphatic diol to the esterification reaction system as appropriate in order to maintain the above molar reaction ratio to fall within the above preferable range.

Regarding the formation of the branched structures represented by formulae (1) to (4) of the aliphatic-aromatic polyester resin of the present invention, it is preferable to use a trifunctional polyol as described above in addition to the components described above, for the production of the aliphatic-aromatic polyester resin.

An amount of use of the trifunctional polyol is preferably 0.00002 mol% or more and less than 8.0 mol%, is more preferably 0.002 mol% or more and 4.0 mol% or less, is further preferably 0.01 mol% or more and 2.0 mol% or less, is particularly preferably 0.02 mol% or more and 1.0 mol% or less, and is more particularly preferably 0.03 mol% or more and 0.8 mol% or less, based on the total moles of the raw material dicarboxylic acid components, in order to form the branched structures represented by formulae (1) to (4) in the above-mentioned preferred proportion of the branched structures (1) to (4) .

In the present invention, it is preferable that an ester oligomer, which is produced in the esterification reaction step and provided to the subsequent polycondensation reaction, have a terminal acid value of 30 to 1000 eq./ton. If the terminal acid value of the ester oligomer needs to be reduced to less than 30 eq./ton, it is necessary to extend the period of the esterification reaction or increase the molar reaction ratio, which results in an increase in an amount of a decomposition product produced as a by-product, such as tetrahydrofuran. Furthermore, staining due to a degraded terminal balance becomes significant. On the other hand, if the terminal acid value of the ester oligomer is greater than 1000 eq./ton, inactivation of the polymerization occurs due to precipitation of the catalyst, and an increase in an amount of a decomposition product produced as a by-product, such as tetrahydrofuran, occurs due to acid. When the terminal acid value of the ester oligomer that is provided to the polycondensation reaction is 30 eq./ton to 1000 eq./ton, the advantageous effects of the present invention can be sufficiently produced.

In the present invention, an ester oligomer having a terminal acid value of 30 to 1000 eq./ton may be obtained in the esterification reaction step, and thereafter, a phosphorus compound may be brought into contact with the ester oligomer having a terminal acid value of 30 to 1000 eq./ton before the ester oligomer is provided to the polycondensation reaction step. In instances where such an ester oligomer is provided to the subsequent polycondensation reaction step, the production of a decomposition product as a by-product, such as tetrahydrofuran, is inhibited, which reduces a purification load of the plant, and, consequently, it is possible to produce an aliphatic-aromatic polyester resin having a good color tone. The terminal acid value of the ester oligomer is more preferably 50 to 800 eq./ton and is further preferably 100 to 500 eq./ton so that the advantageous effects of the present invention can be more reliably produced.

The terminal acid value of the ester oligomer can be controlled to fall within any of the above-mentioned ranges by controlling the reaction conditions, such as the molar reaction ratio of the diol component to the dicarboxylic acid components, the reaction temperature, and the reaction pressure. Specifically, when the molar reaction ratio of the diol component to the dicarboxylic acid components is high, the terminal acid value of the ester oligomer produced tends to be low, and when the molar reaction ratio is low, the terminal acid value of the ester oligomer produced tends to be high. Furthermore, when the reaction temperature is high, and the reaction time is long, the terminal acid value of the ester oligomer produced tends to be low, and conversely, when the reaction temperature is low, and the reaction time is short, the terminal acid value of the ester oligomer produced tends to be high. Accordingly, by appropriately adjusting these conditions such that the above-mentioned preferred ranges are satisfied, it is possible to produce an ester oligomer having a terminal acid value of 30 to 1000 eq./ton.

Furthermore, the terminal acid value of the ester oligomer can also be controlled by appropriately selecting the type of the catalyst that is used in the esterification reaction step and an amount of the catalyst. The catalyst will be described later.

The terminal acid value of the ester oligomer is measured with the method described in Examples below.

### <Polycondensation Reaction Step>

A polycondensation reaction is conducted in the polycondensation reaction step subsequent to the esterification reaction step. In this instance, the ester oligomer produced in the esterification reaction step may be brought into contact with a phosphorus compound before the ester oligomer is provided to the polycondensation reaction step. In this case, the phosphorus compound is to be brought into contact with the ester oligomer having a terminal acid value of 30 to 1000 eq./ton produced in the esterification reaction step, and it is important that no phosphorus compound is present in the esterification reaction step. It is preferable that the phosphorus compound be brought into contact with the ester oligomer together with an alkaline-earth metal compound.

The polycondensation reaction can be conducted using a plurality of reaction tanks arranged sequentially under reduced pressure. Accordingly, bringing a phosphorus compound into contact with the ester oligomer before the polycondensation reaction step corresponds to bringing a phosphorus compound into contact with the ester oligomer before the use of a reduced pressure.

The reaction pressure inside the final polycondensation reaction tank used in the polycondensation reaction step is, as for the lower limit, commonly 0.01 KPa or more and is preferably 0.03 KPa or more; and, as for the upper limit, is commonly 1.4 KPa or less and is preferably 0.4 kPa or less. If the pressure at which the polycondensation reaction is conducted is excessively high, the amount of time required by polycondensation is increased and, accordingly, a reduction in molecular weight and staining are caused as a result of pyrolysis of the polyester. Thus, it may become difficult to produce a polyester having properties sufficient for practical applications. A production method in which an ultrahigh vacuum polycondensation facility capable of achieving a reaction pressure of less than 0.01 KPa is used is preferable in terms of increase in polycondensation reaction velocity, but disadvantageous in terms of cost-effectiveness because this production method requires considerably large capital investment.

The lower limit for the reaction temperature is commonly 215°C and is preferably 220°C. The upper limit for the reaction temperature is commonly 270°C and is preferably 260°C. If the above reaction temperature is less than the above lower limit, the polycondensation reaction velocity is low and a large amount of time is required for producing a polyester having a high degree of polymerization. Moreover, a high-power stirrer is required. Thus, setting the above reaction temperature to be less than the above lower limit is disadvantageous in terms of cost-effectiveness. If the above reaction temperature is more than the above upper limit, pyrolysis of the polyester is likely to occur during production. This may make it difficult to produce a polyester having a high degree of polymerization.

The lower limit for the reaction time is commonly 1 hour. The upper limit for the reaction time is commonly 15 hours, is preferably 10 hours, and is more preferably 8 hours. If the reaction time is excessively short, the reaction does not occur to a sufficient degree and it becomes difficult to produce a polyester having a high degree of polymerization. In addition, the mechanical properties of a molded article formed of the polyester are likely to be poor. If the reaction time is excessively long, molecular weight is significantly reduced as a result of pyrolysis of the polyester. This may degrade the mechanical properties of a molded article formed of the polyester. In addition, the amount of carboxyl group terminals, which adversely affect the durability of the polyester, may be increased as a result of pyrolysis.

It is possible to produce a polyester having an intended intrinsic viscosity by controlling the polycondensation reaction temperature, the reaction time, and the reaction pressure.

### <Catalyst>

Commonly, the aliphatic-aromatic polyester resin of the present invention is produced in the presence of a catalyst. The catalyst may be a catalyst that can be used in the production of known polyester-based resins. Any of such catalysts may be selected as long as the advantageous effects of the present invention are not significantly impaired.

It is preferable to use a catalyst in the polycondensation reaction because the reaction is unlikely to occur without a catalyst. The polycondensation reaction catalyst may be added in any of the stages from the esterification reaction step to the polycondensation reaction step. The polycondensation reaction catalyst may be added in a plurality of batches from the esterification reaction step to the polycondensation reaction step.

As a polycondensation reaction catalyst, a compound that includes at least one selected from the metal elements belonging to Groups 1 to 14 of the periodic table is commonly used. Specific examples of the metal elements include scandium, yttrium, samarium, titanium, zirconium, vanadium, chromium, molybdenum, tungsten, tin, antimony, cerium, germanium, zinc, cobalt, manganese, iron, aluminum, magnesium, calcium, strontium, sodium, and potassium. Among these, scandium, yttrium, titanium, zirconium, vanadium, molybdenum, tungsten, zinc, iron, and germanium are preferable, and titanium, zirconium, tungsten, iron, and germanium are particularly preferable. In order to reduce the concentration of polyester terminals which affect the thermal stability of the polyester, among the above metals, the metal elements belonging to Groups 3 to 6 of the periodic table which have Lewis acidity are further preferable. Specific examples of such metal elements include scandium, titanium, zirconium, vanadium, molybdenum, and tungsten. In consideration of ease of availability, titanium and zirconium are particularly preferable. In consideration of reaction activity, titanium is further preferable.

Note that the term "periodic table" used herein refers to the long form of the periodic table (Nomenclature of Inorganic Chemistry IUPAC Recommendations 2005).

In the present invention, a titanium compound is preferably used as a catalyst for the esterification reaction step.

The titanium compound is preferably tetraalkyl titanate or a hydrolysate thereof. Specific examples of the titanium compound include tetra-n-propyl titanate, tetraisopropyl titanate, tetra-n-butyl titanate, tetra-t-butyl titanate, tetraphenyl titanate, tetracyclohexyl titanate, tetrabenzyl titanate, mixed titanates thereof, and hydrolysates thereof.

Titanium (oxy)acetylacetonate, titanium tetraacetylacetonate, titanium (diisoproxide)acetylacetonate, titanium bis(ammoniumlactato)dihydroxide, titanium bis(ethylacetoacetato)diisopropoxide, titanium (triethanolaminato)isopropoxide, polyhydroxytitanium stearate, titanium lactate, titanium triethanolaminate, butyltitanate dimer, and the like can also be preferably used.

Among these, tetra-n-propyl titanate, tetraisopropyl titanate, tetra-n-butyl titanate, titanium (oxy)acetylacetonate, titanium tetraacetylacetonate, titanium bis(ammoniumlactato)dihydroxide, polyhydroxytitanium stearate, titanium lactate, and butyltitanate dimer are preferable, tetra-n-butyl titanate, titanium (oxy)acetylacetonate, titanium tetraacetylacetonate, polyhydroxytitanium stearate, titanium lactate, and butyltitanate dimer are more preferable, and tetra-n-butyl titanate, polyhydroxytitanium stearate, titanium (oxy)acetylacetonate, and titanium tetraacetylacetonate are particularly preferable.

The above titanium compounds are fed in the esterification reaction step in the form of a catalyst solution, which is prepared using a solvent for catalyst dissolution, such as an alcohol (e.g., methanol, ethanol, isopropanol, or butanol), a diol (e.g., ethylene glycol, butanediol, or pentanediol), an ether (e.g., diethyl ether or tetrahydrofuran), a nitrile (e.g., acetonitrile), a hydrocarbon compound (e.g., heptane or toluene), water, or a mixture thereof, such that the concentration of the titanium compound is commonly 0.05% to 5% by weight.

### <Phosphorus Compound•Alkaline-earth Metal Compound>

Examples of the phosphorus compound brought into contact with the ester oligomer having a terminal acid value of 30 to 1000 eq./ton, which is produced in the esterification reaction step, include orthophosphoric acid, polyphosphoric acid, pentavalent phosphorus compounds, such as trimethyl phosphate, triethyl phosphate, tri-n-butyl phosphate, trioctyl phosphate, triphenyl phosphate, tricresyl phosphate, tris(triethylene glycol) phosphate, ethyl diethylphosphonoacetate, methyl acid phosphate, ethyl acid phosphate, isopropyl acid phosphate, butyl acid phosphate, monobutyl phosphate, dibutyl phosphate, dioctyl phosphate, and triethylene glycol acid phosphate, and trivalent phosphorus compounds, such as phosphorus acid, hypophosphorous acid, diethyl phosphite, trisdodecyl phosphite, trisnonyldecyl phosphite, and triphenyl phosphite. Among these, acidic phosphoric acid ester compounds are preferable. As an acidic phosphoric acid ester compound, a compound having a phosphoric acid ester structure including at least one hydroxyl group which is represented by General Formulae (I) and/or (II) below is preferably used.

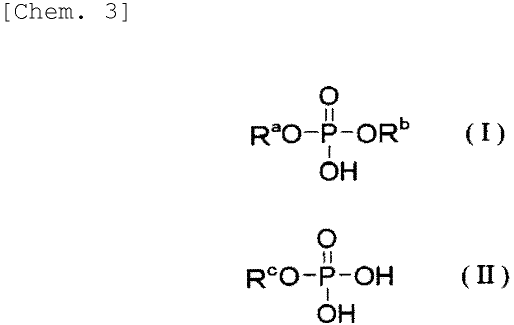

In the above formulae, R^{a}, R^{b}, and R^{c} each represent an alkyl group having 1 to 6 carbon atoms, a cyclohexyl group, an aryl group, or a 2-hydroxyethyl group. In Formula (I), R^{a} and R^{b} may be mutually the same or different.

Specific examples of such acidic phosphoric acid ester compounds include methyl acid phosphate, ethyl acid phosphate, isopropyl acid phosphate, butyl acid phosphate, and octyl acid phosphate. Ethyl acid phosphate and butyl acid phosphate are preferable. The above acidic phosphoric acid ester compounds may be used alone or in combination of two or more.

Acidic phosphoric acid ester compounds are classified into monoester bodies (II) and diester bodies (I). In order to produce a catalyst having high catalytic activity, it is preferable to use a monoester body or a mixture of a monoester body and a diester body. The mixing weight ratio between the monoester body and the diester body (monoester body: diester body) is preferably 80 or less:20 or more, is further preferably 70 or less:30 or more, and is particularly preferably 60 or less:40 or more; and is preferably 20 or more:80 or less, is further preferably 30 or more:70 or less, and is particularly preferably 40 or more:60 or less.

Any of these phosphorous compounds may be used in the present invention.

It is also preferable to bring an alkaline-earth metal compound into contact with the ester oligomer together with the phosphorus compound. Examples of the alkaline-earth metal compound include compounds of beryllium, magnesium, calcium, strontium, and barium. In consideration of ease of handing and availability and catalytic effects, compounds of magnesium and calcium are preferable. A magnesium compound is particularly preferable because it has excellent catalytic effects. Specific examples of the magnesium compound include magnesium acetate, magnesium hydroxide, magnesium carbonate, magnesium oxide, magnesium alkoxide, and magnesium hydrogen phosphate. Among these, magnesium acetate is preferable.

The above phosphorus compound and alkaline-earth metal compound are preferably added to the ester oligomer fed to the polycondensation reaction step in the form of a catalyst solution, which is prepared using the solvent described above as an example of the solvent for catalyst dissolution which is used in the preparation of the catalyst solution of the titanium compound such that the concentration of the phosphorus compound is 0.01% to 7.6% by weight and the concentration of the alkaline-earth metal compound is 0.02% to 9.7% by weight.

The amount of the titanium compound used in the esterification reaction step, the amounts of the phosphorus compound and alkaline-earth metal compound used in the polycondensation reaction step, and the proportions at which the above compounds are used are not limited. For example, it is preferable to use the titanium compound such that the amount of the titanium compound in terms of Ti is 5 to 100 ppm by weight of the amount of the polymer produced. It is preferable to use the phosphorus compound such that the ratio (P/Ti molar ratio) of the number of moles of the phosphorus compound in terms of P relative to the number of moles of the titanium compound in terms of Ti is 0.5 to 2.5. It is preferable to use the alkaline-earth metal compound such that the ratio (alkaline-earth metal/Ti molar ratio) of the number of moles of the alkaline-earth metal compound in terms of alkaline-earth metals relative to the number of moles of the titanium compound in terms of Ti is 0.5 to 3.0. Setting the amount of any of the catalyst compounds to be excessively large is disadvantageous in terms of cost-effectiveness.

Setting the amount of any of the catalyst compounds to be excessively large is disadvantageous in terms of cost-effectiveness. Furthermore, if the amount of any of the catalyst compounds is excessively large, although the reasons are still unknown, the terminal acid value of the polyester produced may be increased finally and, therefore, the thermal stability and hydrolysis resistance of the polyester may become degraded as a result of increases in terminal acid value and the concentration of residual catalyst. If the amount of any of the catalyst compounds is excessively small, reaction activity is reduced and, consequently, the pyrolysis of the polyester in the production of the polyester is induced. This makes it difficult to produce a polyester having physical properties useful in practical applications.

### <Reaction Tank>

In the present invention, known reaction tanks may be used as an esterification reaction tank. The esterification reaction tank may be any of a vertical stirred complete mixing tank, a vertical thermal convection mixing tank, a column continuous reaction tank, and the like may be used. The reaction tank may be a single tank. Alternatively, a plurality of tanks of the same type or different types which are arranged in series may be used as reaction tanks. In particular, a reaction tank having a stirring device is preferable. In addition to common stirring devices that include a power unit, a shaft, and a stirring blade, high-speed rotary stirrers, such as a turbine stator high-speed rotary stirrer, a disk mill stirrer, and a rotary mill stirrer, can also be used.

The mode in which stirring is performed is also not limited; in addition to a common stirring method in which a reaction solution included in a reaction tank is directly stirred from, for example, an upper, lower, or side part of the reaction tank, a method in which part of the reaction solution is diverted outside a reaction tank through a pipe or the like and then stirred with an in-line mixer or the like such that the reaction solution is circulated may also be used.

Known types of stirring blades may be used. Specific examples thereof include a propeller blade, a screw blade, a turbine blade, fan turbine blade, a disk turbine blade, a Pfaudler blade, a FULLZONE blade, and a MAXBLEND blade.

The type of the polycondensation reaction tank used in the present invention is not limited. Examples thereof include a vertical stirred polymerization tank, a horizontal stirred polymerization tank, and a thin-film evaporation polymerization tank. The polycondensation reaction tank may be a single tank. Alternatively, a plurality of tanks of the same type or different types which are arranged in series may be used as polycondensation reaction tanks. In the late stage of polycondensation in which the viscosity of the reaction solution increases, it is preferable to use a horizontal stirred polymerization machine having a thin-film evaporation function which is excellent in terms of interface renewability, plug flow property, and selfcleaning property.

### [Physical Properties of Aliphatic-Aromatic Polyester Resin]

A molecular weight of the aliphatic-aromatic polyester resin of the present invention is commonly 10,000 or more and 1,000,000 or less in terms of a weight average molecular weight (Mw) as measured by gel permeation chromatography (GPC) using monodisperse polystyrene as a standard. The Mw of the aliphatic-aromatic polyester resin of the present invention is preferably 20,000 or more and 500,000 or less, is more preferably 50,000 or more and 400,000 or less, and is further preferably 100,000 or more and 300,000 or less, because of advantages in terms of formability and mechanical strength.

A melt flow rate (MFR) of the aliphatic-aromatic polyester resin of the present invention is commonly 0.1 g/10 min or more and 100 g/10 min or less in terms of values measured in accordance with JIS K 7210 (2014), at a load of 2.16 Kg and at 190°C. In consideration of formability and mechanical strength, the MFR of the aliphatic-aromatic polyester resin of the present invention is preferably 40 g/10 min or less, is more preferably 20 g/10 min or less, and is particularly preferably 10 g/10 min or less and is preferably 1.0 g/10 min or more and is more preferably 2.0 g/10 min or more. The MFR of the aliphatic-aromatic polyester resin can be adjusted by adjusting the molecular weight.

A melting point of the aliphatic-aromatic polyester resin of the present invention is preferably 80°C or more and is more preferably 100°C or more and is preferably 180°C or less, is more preferably 160°C or less, and is particularly preferably less than 140°C. In the case where multiple melting points exist, it is preferable that at least one of the melting points be within any of the above-mentioned ranges. When the melting point is within any of the above-mentioned ranges, excellent formability tends to be achieved.

A glass transition temperature (Tg) of the aliphatic-aromatic polyester resin of the present invention is -25°C or more, is preferably -20°C or more, and is more preferably -15°C or more. The Tg of the aliphatic-aromatic polyester resin of the present invention is preferably 5°C or less and is more preferably 0°C or less. If the glass transition temperature is less than -25°C, a crystallization rate decreases, which may degrade formability. As the glass transition temperature increases, impact strength tends to decrease.

Methods for adjusting the melting point and the glass transition temperature of the aliphatic-aromatic polyester resin are not particularly limited. For example, the adjustment can be made with the selection of the types of the copolymerization components of the aliphatic dicarboxylic acid and the aromatic dicarboxylic acid, the adjustment of the copolymerization ratios, and a combination of these.

The melting point and the glass transition temperature of the aliphatic-aromatic polyester resin are measured with the methods described in Examples below.

### [Additives]

The aliphatic-aromatic polyester resin of the present invention may include one or more additives in amounts that do not impair the properties of the aliphatic-aromatic polyester resin. Examples of the additives include heat stabilizers, antioxidants, hydrolysis inhibitors, crystal nucleating agents, flame retardants, antistatic agents, release agents, and UV absorbers.

The additives may be added to the reaction apparatus before the polymerization reaction, may be added to a transfer device after the start of the polymerization reaction and before the end of the polymerization reaction, or may be added after the end of the polymerization reaction and before the drawing of the product. Alternatively, the additives may be added to the polyester after the drawing.

### [Molded Article of Aliphatic-Aromatic Polyester Resin]

The aliphatic-aromatic polyester resin of the present invention can be molded in accordance with any of various molding methods applicable to thermoplastic resins.

Examples of the molding methods include compression molding (compression molding, lamination molding, and stampable molding), injection molding, extrusion molding/coextrusion molding (film molding that uses an inflation method or a T-die method, lamination molding, pipe molding, wire/cable molding, and profile molding), blow molding (various blow molding processes), calendaring, foam molding (melt foaming and solid foaming), solid molding (uniaxial stretching, biaxial stretching, rolling, stretched oriented nonwoven fabric molding, thermoforming (vacuum forming and pressure forming), plastic working), powder molding (rotational molding), and various nonwoven fabric molding (dry methods, adhesion methods, entangling methods, spun-bond methods, and the like).

Molded articles made of the aliphatic-aromatic polyester resin of the present invention are suitable for use in a wide variety of applications, for example, in packaging materials for packaging liquids, powders, granular materials, and solids, such as foods, chemicals, and sundries, agricultural materials, construction materials, and the like. Specific examples of the applications include those in injection molded articles (e.g., trays for perishable foods, containers for fast food, and products for outdoor leisure), extrusion molded articles (e.g., films, fishing lines, fishing nets, vegetation nets, water-retention sheets, and the like), and blow molded articles (bottles and the like). Other examples include those in agricultural films, coating materials, coating materials for fertilizers, laminate films, plates, stretched sheets, monofilaments, nonwoven fabrics, flat yarns, staples, crimped fibers, striated tapes, split yarns, composite fibers, blow-molded bottles, shopping bags, trash bags, compost bags, containers for cosmetics, containers for detergents, containers for bleaching agents, ropes, tying materials, sanitary cover stock materials, cooling boxes, cushioning material films, multifilaments, and synthetic paper. Furthermore, examples of medical applications include those in surgical thread, suture thread, artificial bones, artificial skins, DDSs, such as microcapsules, and wound dressings.

Further examples include those in information electronic materials, such as toner binders and thermal transfer ink binders, packaging materials, such as packaging films, fruit and vegetable bags, shopping bags, compost bags, bags, trays, bottles, cushioning foams, and fish boxes, and agricultural materials, such as mulching films, tunnel films, green house films, shades, weed prevention sheets, ridge sheets, germination sheets, vegetation mats, seedling trays, and plant pots.

The molded articles of the present invention have excellent mechanical properties, biodegradability, and the like, the mechanical properties including impact resistance, tear strength, and tensile elongation at break. Accordingly, it is particularly preferable that the molded articles be used in film applications, among the applications mentioned above.

Films of the present invention molded from the aliphatic-aromatic polyester resin of the present invention have a thickness that is not particularly limited and is appropriately designed in accordance with their uses. Commonly, the thickness of the films of the present invention is approximately 5 µm to 1 mm.

### EXAMPLES

Specific embodiments of the present invention will be described in more detail below with reference to examples. The present invention is not limited to the examples below as long as the summary of the present invention is not exceeded.

The values of various production conditions and evaluation results in the following examples are to be understood as preferred upper or lower limit values of embodiments of the present invention, and preferred ranges may be a range defined by a combination of the upper or lower limit value and a value of an example described below or by a combination of values of examples described below.

### [Analysis, Measurement, and Evaluation Methods]

In the present invention, the methods for analysis and the methods for measuring and evaluating physical properties are as follows.

### (1) Measurement of Molar Fractions of Aliphatic-Aromatic Polyester Resin

¹H-NMR spectra were measured on an Avance 400 NMR apparatus, manufactured by Bruker, and the molar fraction of the structural units of the aliphatic-aromatic polyester resin was determined from the ratio between the integral values of the chemical shifts of the corresponding structural units.

When the aliphatic dicarboxylic acid units are succinic acid units, and the aromatic dicarboxylic acid units are terephthalic acid units, the molar ratio of the succinic acid units to the terephthalic acid units, that is, the aliphatic dicarboxylic acid units to the aromatic dicarboxylic acid units, can be determined from the ratio of the integral at 2.63 ppm to the integral at 8.10 ppm.

In the case where trimethylolpropane is used as the trifunctional polyol, the proportion (mol%) of each of the branched structures and the proportion (mol%) of the branched structures (1) to (4) can be determined from the ratio between the integral at 1.09 ppm, which corresponds to the branched structure represented by formula (1), the integral at 1.02 ppm, which corresponds to the branched structure represented by formula (2), the integral at 0.95 ppm, which corresponds to the branched structure represented by formula (3), and the integral at 0.88 ppm, which corresponds to the branched structure represented by formula (4) .

When the aliphatic dicarboxylic acid units are succinic acid units, and the aromatic dicarboxylic acid units are furandicarboxylic acid units, the molar ratio of the succinic acid units to the furandicarboxylic acid units, that is, the aliphatic dicarboxylic acid units to the aromatic dicarboxylic acid units, can be determined from the ratio of the integral at 2.62 ppm to the integral at 7.20 ppm.

In the case where trimethylolpropane is used as the trifunctional polyol, the proportion (mol%) of each of the branched structures and the proportion (mol%) of the branched structures (1) to (4) can be determined from the ratio between the integral at 1.04 ppm, which corresponds to the branched structure represented by formula (1), the integral at 0.98 ppm, which corresponds to the branched structure represented by formula (2), the integral at 0.93 ppm, which corresponds to the branched structure represented by formula (3), and the integral at 0.88 ppm, which corresponds to the branched structure represented by formula (4) .

### (2) Method for Measuring MFR of Aliphatic-Aromatic Polyester Resin

The melt flow rate (MFR) was measured in accordance with JIS K 7210 (2014), at a load of 2.16 Kg and at 190°C.

### (3) Method for Measuring Glass Transition Temperature, Crystallization Peak Temperature, Crystallization Peak Area, and Melting Point of Aliphatic-Aromatic Polyester Resin

The measurements were performed with a differential scanning calorimeter (product name: DSC220, manufactured by Seiko Instruments Inc.). Approximately 5 mg of a sample was accurately weighed. The sample was heated and melted at 200°C under a nitrogen stream at a flow rate of 40 mL/min and subsequently cooled at a rate of 10°C/min. The crystallization peak temperature and area were determined based on the exothermic peak associated with the cooling. The sample was then heated at a rate of 10°C/min. The glass transition temperature and the melting point associated with the heating were measured.

### (4) Method for Measuring Weight Average Molecular Weight (Mw) of Aliphatic-Aromatic Polyester Resin

The weight average molecular weight (Mw) of the aliphatic-aromatic polyester resin was measured by gel permeation chromatography (GPC) using polystyrene as a standard.

### (5) Method for Measuring Tensile Elongation at Break of Aliphatic-Aromatic Polyester Resin Film

In a thermal press machine, 5 to 6 g of the aliphatic-aromatic polyester resin was preheated at a temperature of 100°C to 230°C to be placed in a molten state and was pressed with a spacer. In this manner, a pressed film having a thickness of 250 µm was prepared.

The pressed film having a thickness of 250 µm was preheated in an environment at 80 to 170°C for 5 minutes and then simultaneously biaxially stretched at a rate of 30 mm/s at a stretch ratio of 4.5×2. In this manner, a biaxially oriented film having a thickness of approximately 25 µm was prepared.

The biaxially oriented film was punched to form a film specimen, and a test was conducted in accordance with ISO 527-2 (2012). An elongation at break MD (%) and an elongation at break TD (%) were measured, where MD denotes a long axis, and TD denotes a short axis, and an average value (an average value of the elongations at break MD and TD) was calculated.

### (6) Rate of Change in Stirring Torque During Melting of Aliphatic-Aromatic Polyester Resin

13 g of the aliphatic-aromatic polyester resin was kneaded at 190°C for 5 minutes in a Micro 15cc Twin Screw Compounder (Rheo Lab Ltd.). In this process, a change in the value of torque (N) of a kneading blade over time was measured, and a rate of increase in the torque in 5 minutes was calculated.

### [Example 1]

Into a reaction container equipped with a stirring device, a nitrogen introduction port, a heating device, a thermometer, and a pressure reducing port, 100 parts by weight of succinic acid, 141 parts by weight of terephthalic acid, 168 parts by weight of 1,4-butanediol, 0.73 parts by weight of trimethylolpropane, 4 parts by weight of a 1,4-butanediol solution in which 5 parts by weight of tetra-n-butyl titanate was dissolved in advance, and 6.6 parts by weight of a 1,4-butanediol solution in which 2 parts by weight of magnesium acetate tetrahydrate was dissolved in advance were charged as raw materials. The molar ratio between the succinic acid and the terephthalic acid was 50:50. The molar ratio of the 1,4-butanediol to the total moles of the succinic acid and the terephthalic acid was 1.1. The trimethylolpropane was present in an amount of 0.16 mol% based on the total moles of all the structural units of the polymer that was to be produced.

While the contents of the container were stirred, a nitrogen gas was introduced to the container. The atmosphere inside the system was converted into a nitrogen atmosphere by reduced pressure replacement. Subsequently, while the inside of the system was stirred, the temperature was increased to 185°C, and a reaction was conducted at 185°C for 45 minutes to 1 hour. Subsequently, the temperature was increased to 220°C over 1 hour and 30 minutes. Thereafter, while the temperature was increased to 230°C over 1 hour, the pressure was reduced to 0.07 KPa or less over 1 hour and 30 minutes. While the heating-depressurizing state was maintained, the polymerization was continued. The polymerization was finished when the viscosity reached a predetermined value. Hereby, an aliphatic-aromatic polyester resin was prepared.

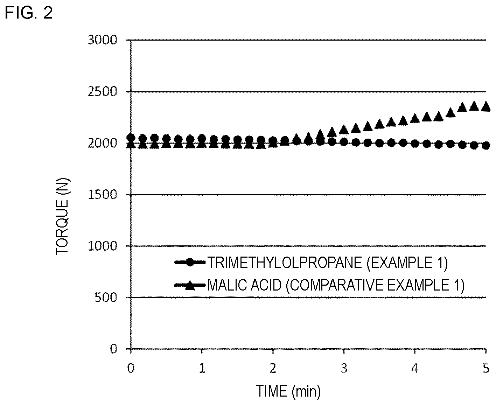

Measurements were performed on the prepared aliphatic-aromatic polyester to determine the proportion (mol%) of the branched structures (1) to (4), the proportion (mol%) of each of the branched structures, the crystallization peak temperature (°C), the crystallization peak area (J/g), the melting point (°C), the glass transition temperature (°C), the weight average molecular weight, the MFR (g/10 min), the elongation at break MD (%), the elongation at break TD (%), the average value (%) of the elongations at break MD and TD, and the rate (%) of increase in torque (in 5 minutes) during melting. The results of the measurements are shown in Table 1. Furthermore, the change in the stirring torque over time during melting is illustrated in Fig. 2.

### [Comparative Example 1]

Operations similar to those of Example 1 were conducted, except that 0.73 parts by weight of malic acid was used instead of 0.73 parts by weight of trimethylolpropane. The results are shown in Table 1. Furthermore, the change in the stirring torque over time during melting is illustrated in Fig. 2.

### [Comparative Example 2]

An aliphatic-aromatic polyester resin was prepared under conditions similar to those of Example 1, except that 0.50 parts by weight of glycerol was used instead of 0.73 parts by weight of trimethylolpropane.

Measurements were performed on the prepared aliphatic-aromatic polyester to determine the proportion (mol%) of the branched structures (1) to (4), the proportion (mol%) of each of the branched structures, the crystallization peak temperature (°C), the crystallization peak area (J/g), the melting point (°C), the glass transition temperature (°C), the weight average molecular weight, the MFR (g/10 min), the elongation at break MD (%), the elongation at break TD (%), and the average value (%) of the elongations at break MD and TD. The results of the measurements are shown in Table 1.

### [Example 2]

An aliphatic-aromatic polyester resin was prepared under conditions similar to those of Example 1, except that trimethylolpropane was present in an amount of 0.46 parts by weight, and thus, the proportion thereof was 0.101 mol% based on the total moles of all the structural units of the polymer that was to be produced.

Measurements were performed on the prepared aliphatic-aromatic polyester to determine the proportion (mol%) of the branched structures (1) to (4), the proportion (mol%) of each of the branched structures, the melting point (°C), the glass transition temperature (°C), the weight average molecular weight, the MFR (g/10 min), the elongation at break MD (%), the elongation at break TD (%), and the average value (%) of the elongations at break MD and TD. The results are shown in Table 2.

### [Example 3]

An aliphatic-aromatic polyester resin was prepared under conditions similar to those of Example 1, except that trimethylolpropane was present in an amount of 0.17 parts by weight, and thus, the proportion thereof was 0.037 mol% based on the total moles of all the structural units of the polymer that was to be produced.

Measurements were performed on the prepared aliphatic-aromatic polyester to determine the proportion (mol%) of the branched structures (1) to (4), the proportion (mol%) of each of the branched structures, the melting point (°C), the glass transition temperature (°C), the weight average molecular weight, the MFR (g/10 min), the elongation at break MD (%), the elongation at break TD (%), and the average value (%) of the elongations at break MD and TD. The results are shown in Table 2.

### [Example 4]

An aliphatic-aromatic polyester resin was prepared under conditions similar to those of Example 1, except that trimethylolpropane was present in an amount of 0.068 parts by weight, and thus, the proportion thereof was 0.015 mol% based on the total moles of all the structural units of the polymer that was to be produced.

Measurements were performed on the prepared aliphatic-aromatic polyester to determine the proportion (mol%) of the branched structures (1) to (4), the proportion (mol%) of each of the branched structures, the melting point (°C), the glass transition temperature (°C), the weight average molecular weight, the MFR (g/10 min), the elongation at break MD (%), the elongation at break TD (%), and the average value (%) of the elongations at break MD and TD. The results are shown in Table 2.

### [Example 5]

An aliphatic-aromatic polyester resin was prepared under conditions similar to those of Example 1, except that succinic acid was present in an amount of 80 parts by weight, terephthalic acid in an amount of 169 parts by weight, and trimethylolpropane in an amount of 0.75 parts by weight; thus, the molar ratio between the succinic acid and the terephthalic acid was 40:60, and the proportion of the trimethylolpropane was 0.164 mol% based on the total moles of all the structural units of the polymer that was to be produced.

Measurements were performed on the prepared aliphatic-aromatic polyester to determine the proportion (mol%) of the branched structures (1) to (4), the proportion (mol%) of each of the branched structures, the melting point (°C), the glass transition temperature (°C), the weight average molecular weight, the MFR (g/10 min), the elongation at break MD (%), the elongation at break TD (%), and the average value (%) of the elongations at break MD and TD. The results are shown in Table 2.

### [Example 6]

An aliphatic-aromatic polyester resin was prepared under conditions similar to those of Example 1, except that succinic acid was present in an amount of 110 parts by weight, terephthalic acid in an amount of 127 parts by weight, and trimethylolpropane in an amount of 0.46 parts by weight; thus, the molar ratio between the succinic acid and the terephthalic acid was 55:45, and the proportion of the trimethylolpropane was 0.100 mol% based on the total moles of all the structural units of the polymer that was to be produced.

Measurements were performed on the prepared aliphatic-aromatic polyester to determine the proportion (mol%) of the branched structures (1) to (4), the proportion (mol%) of each of the branched structures, the melting point (°C), the glass transition temperature (°C), the weight average molecular weight, the MFR (g/10 min), the elongation at break MD (%), the elongation at break TD (%), and the average value (%) of the elongations at break MD and TD. The results are shown in Table 3.

### [Example 7]

An aliphatic-aromatic polyester resin was prepared under conditions similar to those of Example 1, except that succinic acid was present in an amount of 120 parts by weight, terephthalic acid in an amount of 113 parts by weight, and trimethylolpropane in an amount of 0.71 parts by weight; thus, the molar ratio between the succinic acid and the terephthalic acid was 60:40, and the proportion of the trimethylolpropane was 0.156 mol% based on the total moles of all the structural units of the polymer that was to be produced.

Measurements were performed on the prepared aliphatic-aromatic polyester to determine the proportion (mol%) of the branched structures (1) to (4), the proportion (mol%) of each of the branched structures, the melting point (°C), the glass transition temperature (°C), the weight average molecular weight, the MFR (g/10 min), the elongation at break MD (%), the elongation at break TD (%), and the average value (%) of the elongations at break MD and TD. The results are shown in Table 3.

### [Comparative Example 3]

An aliphatic-aromatic polyester resin was prepared under conditions similar to those of Example 1, except that an amount of trimethylolpropane was 0 parts by weight, and thus, the proportion thereof was 0.00 mol% based on the total moles of all the structural units of the polymer that was to be produced.

Measurements were performed on the prepared aliphatic-aromatic polyester to determine the proportion (mol%) of the branched structures (1) to (4), the proportion (mol%) of each of the branched structures, the melting point (°C), the glass transition temperature (°C), the weight average molecular weight, the MFR (g/10 min), the elongation at break MD (%), the elongation at break TD (%), and the average value (%) of the elongations at break MD and TD. The results are shown in Table 2.

### [Comparative Example 4]

An aliphatic-aromatic polyester resin was prepared under conditions similar to those of Example 1, except that succinic acid was present in an amount of 180 parts by weight, terephthalic acid in an amount of 28 parts by weight, and trimethylolpropane in an amount of 0.75 parts by weight; thus, the molar ratio between the succinic acid and the terephthalic acid was 90:10, and the proportion of the trimethylolpropane was 0.164 mol% based on the total moles of all the structural units of the polymer that was to be produced.

Measurements were performed on the prepared aliphatic-aromatic polyester to determine the proportion (mol%) of the branched structures (1) to (4), the proportion (mol%) of each of the branched structures, the melting point (°C), the glass transition temperature (°C), the weight average molecular weight, the MFR (g/10 min), the elongation at break MD (%), the elongation at break TD (%), and the average value (%) of the elongations at break MD and TD. The results are shown in Table 3.

### [Comparative Example 5]

An aliphatic-aromatic polyester resin was prepared under conditions similar to those of Example 1, except that succinic acid was present in an amount of 20 parts by weight, terephthalic acid in an amount of 253 parts by weight, and trimethylolpropane in an amount of 0.75 parts by weight; thus, the molar ratio between the succinic acid and the terephthalic acid was 10:90, and the proportion of the trimethylolpropane was 0.164 mol% based on the total moles of all the structural units of the polymer that was to be produced.

Measurements were performed on the prepared aliphatic-aromatic polyester to determine the proportion (mol%) of the branched structures (1) to (4), the proportion (mol%) of each of the branched structures, the melting point (°C), the glass transition temperature (°C), and the weight average molecular weight. This aliphatic-aromatic polyester resin had a high melting point, and, therefore, the MFR thereof could not be measured, and since the aliphatic-aromatic polyester resin was not moldable, the MFR and the tensile elongation at break thereof could not be measured. The results are shown in Table 3.

### [Example 8]

An aliphatic-aromatic polyester resin was prepared under conditions similar to those of Example 1, except that succinic acid was present in an amount of 80 parts by weight, furandicarboxylic acid, which was used instead of terephthalic acid, in an amount of 159 parts by weight, and trimethylolpropane in an amount of 0.75 parts by weight; thus, the molar ratio between the succinic acid and the furandicarboxylic acid was 40:60, and the proportion of the trimethylolpropane was 0.164 mol% based on the total moles of all the structural units of the polymer that was to be produced.

Measurements were performed on the prepared aliphatic-aromatic polyester to determine the proportion (mol%) of the branched structures (1) to (4), the proportion (mol%) of each of the branched structures, the melting point (°C), the glass transition temperature (°C), the weight average molecular weight, the MFR (g/10 min), the elongation at break MD (%), the elongation at break TD (%), and the average value (%) of the elongations at break MD and TD. The results are shown in Table 3.

### [Comparative Example 6]

An aliphatic-aromatic polyester resin was prepared under conditions similar to those of Example 8, except that an amount of trimethylolpropane was 0 parts by weight, and thus, the proportion thereof was 0.00 mol% based on the total moles of all the structural units of the polymer that was to be produced.

Measurements were performed on the prepared aliphatic-aromatic polyester to determine the proportion (mol%) of the branched structures (1) to (4), the proportion (mol%) of each of the branched structures, the melting point (°C), the glass transition temperature (°C), the weight average molecular weight, the MFR (g/10 min), the elongation at break MD (%), the elongation at break TD (%), and the average value (%) of the elongations at break MD and TD. The results are shown in Table 3.

**[Table 1]**

| | | Example 1 | Comparative Example 1 | Comparative Example 2 |
|---|---|---|---|---|
| Aliphatic dicarboxylic acid units/ aromatic dicarboxylic acid units | Molar ratio | 50/50 | 50/50 | 50/50 |
| Proportion of branched structures (1) to (4) | mol% | 0.160 | 0 | 0 |
| Proportion of branched structure (1) | mol% | 0.018 | 0 | 0 |
| Proportion of branched structure (2) | mol% | 0.061 | 0 | 0 |
| Proportion of branched structure (3) | mol% | 0.063 | 0 | 0 |
| Proportion of branched structure (4) | mol% | 0.018 | 0 | 0 |
| Proportion of malic acid branched structures* | mol% | 0 | 0.160 | 0 |
| Proportion of glycerol branched structures** | mol% | 0 | 0 | 0.160 |
| Melting point | °C | 134 | 134 | 133 |
| Glass transition temperature Tg | °C | -12 | -12 | -12 |
| MFR | g/10 min | 4.5 | 4.5 | 5.0 |
| Weight average molecular weight | - | 133000 | 133000 | 131000 |
| Thickness of film | Mm | 26 | 25 | 26 |
| Elongation at break MD | % | 190 | 160 | 150 |
| Elongation at break TD | % | 510 | 480 | 470 |
| Average value of elongations at break MD and TD | % | 350 | 320 | 310 |
| Rate of increase in torque (in 5 minutes) during melting | % | 0 | 18 | - |
| Crystallization peak temperature | °C | 45 | 45 | 41 |
| Crystallization peak area | J/g | 17 | 17 | 13 |

| | | | | |
|---|---|---|---|---|
| * Proportion of malic acid-derived branched structures in all structural units ** Proportion of glycerol-derived branched structures in all structural units | | | | |

**[Table 2]**

| | | Example 2 | Example 3 | Example 4 | Comparative Example 3 | Example 5 |
|---|---|---|---|---|---|---|
| Aliphatic dicarboxylic acid units/ aromatic dicarboxylic acid units | Molar ratio | 50/50 | 50/50 | 50/50 | 50/50 | 40/60 |
| Proportion of branched structures (1) to (4) | mol% | 0.101 | 0.037 | 0.015 | 0 | 0.164 |
| Proportion of branched structure (1) | mol% | 0.012 | 0.005 | 0.002 | 0 | 0.035 |
| Proportion of branched structure (2) | mol% | 0.039 | 0.014 | 0.006 | 0 | 0.071 |
| Proportion of branched structure (3) | mol% | 0.037 | 0.013 | 0.005 | 0 | 0.047 |
| Proportion of branched structure (4) | mol% | 0.013 | 0.005 | 0.002 | 0 | 0.011 |
| Melting point | °C | 131 | 131 | 130 | 132 | 158 |
| Glass transition temperature Tg | °C | -12 | -12 | -12 | -12 | -3 |
| MFR | g/10 min | 4.5 | 5 | 8 | 14 | 4.5 |
| Weight average molecular weight | - | 135000 | 134000 | 130000 | 110000 | 135000 |
| Thickness of film | µm | 24 | 25 | 25 | 24 | 30 |
| Elongation at break MD | % | 180 | 160 | 160 | 160 | 170 |
| Elongation at break TD | % | 490 | 480 | 470 | 450 | 460 |
| Average value of elongations at break MD and TD | % | 335 | 320 | 315 | 305 | 315 |

**[Table 3]**

| | | Example 6 | Example 7 | Comparative Example 4 | Comparative Example 5 | Example 8 | Comparative Example 6 |
|---|---|---|---|---|---|---|---|
| Aliphatic dicarboxylic acid units/ aromatic dicarboxylic acid units | Molar ratio | 55/45 | 60/40 | 90/10 | 10/90 | 40/60 | 40/60 |
| Proportion of branched structures (1) to (4) | mol% | 0.100 | 0.156 | 0.164 | 0.164 | 0.164 | 0 |
| Proportion of branched structure (1) | mol% | 0.011 | 0.011 | 0.001 | 0.119 | 0.036 | 0 |
| (2) Proportion of branched structure | mol% | 0.031 | 0.043 | 0.005 | 0.040 | 0.071 | 0 |
| Proportion of branched structure (3) | mol% | 0.040 | 0.068 | 0.038 | 0.004 | 0.046 | 0 |
| Proportion of branched structure (4) | mol% | 0.018 | 0.034 | 0.120 | 0.001 | 0.011 | 0 |
| Melting point | °C | 115 | 101 | 100 | 209 | 103 | 102 |
| Glass transition temperature Tg | °C | -20 | -21 | -34 | 14 | 2 | 2 |
| MFR | g/10 min | 4.5 | 4.8 | 5.0 | ND | 4.5 | 12 |
| Weight average molecular weight | - | 136000 | 134000 | 134000 | 136000 | 136000 | 115000 |
| Thickness of film | µm | 23 | 28 | 30 | ND | 28 | 29 |
| Elongation at break MD | % | 170 | 190 | 70 | ND | 180 | 160 |
| Elongation at break TD | % | 530 | 600 | 130 | ND | 460 | 410 |
| Average value of elongations at break MD and TD | % | 350 | 395 | 100 | ND | 320 | 285 |

Table 1 and Fig. 2 provide the following observations.

In the aliphatic-aromatic polyester resin of Comparative Example 1, a crosslinking reaction proceeds during kneading and/or molding at a high temperature. This is presumed to be due to the use of malic acid as a branching agent. Consequently, a change in the melt viscosity results in a molding failure. Furthermore, gelation can cause appearance defects of a film, such as fish-eyes.

On the other hand, the aliphatic-aromatic polyester resin of Example 1, which includes the branched structures (1) to (4), exhibits a higher thermal stability when heated than that of Comparative Example 1, which does not include the branched structures (1) to (4), and, therefore, is moldable without a crosslinking reaction being caused and, therefore, has excellent molding stability.

It is apparent that the aliphatic-aromatic polyester resin of Comparative Example 2 has a low crystallization peak temperature and a crystallization peak area that is less than that of the aliphatic-aromatic polyester resin of Example 1, which includes the branched structures (1) to (4), and, accordingly, the crystallinity of the aliphatic-aromatic polyester resin of Comparative Example 2 is significantly low. This is presumed to be due to the use of glycerol as a branching agent. Consequently, a decrease in molding stability and molding speed can occur, which can cause a problem such as fusing of a film after molding.

Compared with Comparative Example 2, which does not include the branched structures (1) to (4), the aliphatic-aromatic polyester resin of Example 1, which includes the branched structures (1) to (4), has sufficient crystallinity and, therefore, has excellent molding stability.

Tables 2 and 3 provide the following observations.

As demonstrated by Comparative Example 3 and Comparative Example 6, aliphatic-aromatic polyester resins that do not include the branched structures (1) to (4) have a low elongation at break of a film, which indicates poor mechanical properties.

As demonstrated by Examples 1 to 8, the presence of the branched structures (1) to (4) in the aliphatic-aromatic polyester resin contributes to an increase in the melt viscosity in a low shear region of the aliphatic-aromatic polyester resin, which enables realization of an MFR of 10 g/10 min or less, which is generally believed to be favorable for the molding of films and sheets. Furthermore, as demonstrated by Examples 1 to 8, films that are excellent in terms of an elongation at break, which is a particularly important mechanical property of films, can be obtained.

Although the present invention has been described in detail with reference to specific aspects, it is apparent to a person skilled in the art that various alterations and modifications can be made therein without departing from the spirit and scope of the present invention.

The present application is based on Japanese Patent Application No. 2020-122966 filed on July 17, 2020, which is incorporated herein by reference in its entirety.

## Claims

1. An aliphatic-aromatic polyester resin comprising principal structural units that comprise aliphatic dicarboxylic acid units, aromatic dicarboxylic acid units, and aliphatic diol units and/or alicyclic diol units, wherein
an abundance ratio (molar ratio) between the aliphatic dicarboxylic acid units and the aromatic dicarboxylic acid units is 15:85 to 85:15,
the aliphatic-aromatic polyester resin has a glass transition temperature of -25°C or more, and
the aliphatic-aromatic polyester resin has branched structures represented by formulae (1) to (4) below: 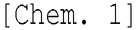 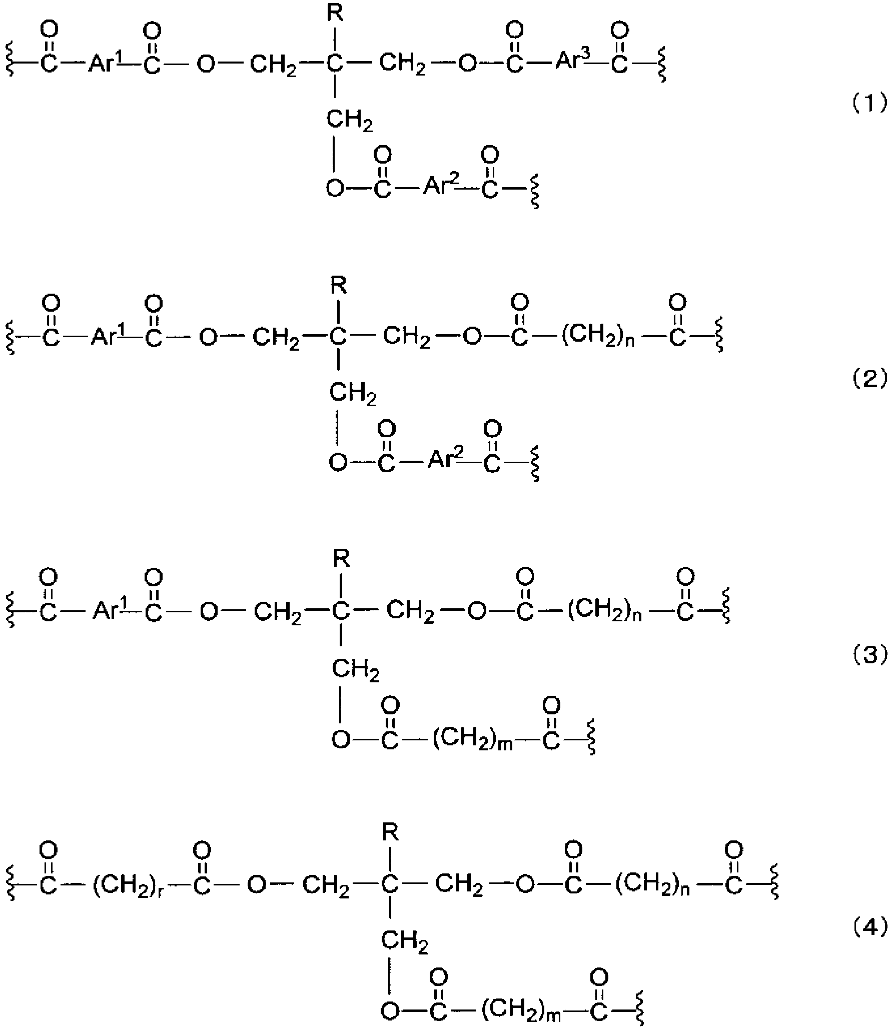
where Ar¹, Ar², and Ar³ each independently represent an optionally substituted divalent group having 4 to 12 carbon atoms, the optionally substituted divalent group being a divalent aromatic hydrocarbon group or a divalent aromatic heterocyclic group; R represents a hydrogen atom or an alkyl group having 1 to 4 carbon atoms; and n, m, and r are each independently an integer of 2 to 10.

2. The aliphatic-aromatic polyester resin according to Claim 1, wherein a proportion, expressed in terms of mol%, of a total of the branched structures represented by formulae (1) to (4) to a total of all structural units is 0.00001 mol% or more and less than 4.0 mol%.

3. The aliphatic-aromatic polyester resin according to Claim 1 or 2, wherein the aliphatic dicarboxylic acid units are units of a linear aliphatic dicarboxylic acid having 4 to 10 carbon atoms, the aromatic dicarboxylic acid units are units of an aromatic dicarboxylic acid having 6 to 8 carbon atoms, and the aliphatic diol units are units of a linear diol having 2 to 4 carbon atoms.

4. The aliphatic-aromatic polyester resin according to any one of Claims 1 to 3, wherein the aliphatic dicarboxylic acid units are succinic acid units, the aromatic dicarboxylic acid units are terephthalic acid units, and the aliphatic diol units are 1,4-butanediol units.

5. A molded article molded from the aliphatic-aromatic polyester resin according to any one of Claims 1 to 4.

6. A film molded from the aliphatic-aromatic polyester resin according to any one of Claims 1 to 4.
